(19) Europäisches Patentamt
European Patent Office
Office européen des brevets

(11) Numéro de publication : **0 085 601**
**B1**

(12) # FASCICULE DE BREVET EUROPÉEN

(45) Date de publication du fascicule du brevet : **07.08.85**

(51) Int. Cl.[4] : **C 04 B 35/80**

(21) Numéro de dépôt : **83400126.5**

(22) Date de dépôt : **19.01.83**

(54) **Procédé de fabrication d'une structure composite de type réfractaire-réfractaire et structure obtenue.**

(30) Priorité : **22.01.82 FR 8201025**

(43) Date de publication de la demande :
**10.08.83 Bulletin 83/32**

(45) Mention de la délivrance du brevet :
**07.08.85 Bulletin 85/32**

(84) Etats contractants désignés :
**DE FR GB IT SE**

(56) Documents cités :
**EP-A- 0 023 097**
**CH-A- 520 209**
**GB-A- 1 353 384**
**GB-A- 2 053 873**
**US-A- 3 386 918**
**US-A- 4 205 032**
**US-A- 4 252 588**
**AD-REPORT no. 701.013 (AMMRC-TR 69-24), octobre 1969, Army Materials and Mechanics Research Center, Watertown, Mass., USA P. WONG et al.: "Chemical Vapor deposition of Polycrystalline Aluminium Oxide"**

(73) Titulaire : **SOCIETE EUROPEENNE DE PROPULSION (S.E.P.) Société Anonyme dite:
3, avenue du Général de Gaulle
F-92800 Puteaux (FR)**

(72) Inventeur : **Colmet, Robert
129, avenue de St. Médard
F-33320 Eysines (FR)**
Inventeur : **Naslain, Roger René
Résidence du Pontet "Les Joncs"
avenue du Pontet F-33600 Pessac (FR)**
Inventeur : **Hagenmuller, Paul
351, cours de la Libération
F-33405 Talence (FR)**
Inventeur : **Lamicq, Pierre Jacques
37, rue Louis Pasteur
F-33520 Bruges (FR)**

(74) Mandataire : **Joly, Jean-Jacques et al
CABINET BEAU DE LOMENIE 55, rue d'Amsterdam
F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention se rapporte aux structures composites de type réfractaire-réfractaire, et, plus particulièrement, aux structures comportant une texture fibreuse réfractaire densifiée par une matrice constituée par une matière réfractaire à base d'un ou plusieurs oxydes.

Par texture fibreuse, on entend ici une texture formée par des fils, tissus, feutres, mats, baguettes disposés de manière aléatoire ou non et ayant éventuellement reçu un pré-traitement de consolidation par dépôt par voie gazeuse ou liquide.

On connaît déjà des structures composites de type carbone-carbone constituées d'une préforme poreuse de fibres de carbone, densifiée en phase gazeuse par infiltration chimique d'une matrice carbonée. L'intérêt des composites de ce type a été largement démontré dans de nombreuses applications thermo-mécaniques, notamment dans le domaine aérospatial (matériaux de tuyères, protection thermique des corps de rentrée). Ces mêmes matériaux ont, par ailleurs, reçu des applications dans divers autres domaines (disques de freinage, prothèses osseuses, par exemple). En dépit de leurs nombreux avantages, les structures carbone-carbone présentent certains inconvénients liés aux propriétés chimiques intrinsèques du carbone. C'est ainsi qu'elles ne peuvent être utilisées en atmosphère oxydante et de manière continue à des températures supérieures à 500 °C environ, sans se dégrader de manière significative.

Une amélioration a été apportée en substituant une partie de la matrice de carbone par du carbure de silicium qui a à la fois une bonne tenue à l'oxydation et une bonne compatibilité chimique avec les fibres de carbone à haute température. La fabrication de structures composites à architecture fibreuse de carbone et à matrice hybride carbone-carbure de silicium, peut être également réalisée par infiltration en phase gazeuse, ainsi que le décrit la demande de brevet français n° 2 401 888. Ces structures composites présentent, par rapport aux structures carbone-carbone, des propriétés thermo-mécaniques en atmosphère oxydante nettement améliorées et ceci jusqu'à des températures pouvant atteindre 1 500 °C pendant de courtes durées. Toutefois, la bonne tenue à l'oxydation due à la protection apportée au carbone par le carbure de silicium, a tendance à se dégrader si l'agent oxydant est susceptible de diffuser au sein du matériau par suite de la formation de microfissures. C'est ainsi que toute fibre de carbone qui perd sa protection de carbure de silicium, s'oxyde préférentiellement et constitue un chemin pour la diffusion à cœur de l'agent oxydant. Il est donc difficile d'envisager un emploi prolongé de ces composites en atmosphère oxydante à des températures supérieures à 1 200 °C environ.

Une autre amélioration peut être apportée en remplaçant simultanément fibres et matrice de carbone par du carbure de silicium ainsi que le décrit la demande de brevet européen N° 0 032 097. Les structures composites comportant une préforme de fibres de carbure de silicium densifiée par du carbure de silicium ont une tenue à l'oxydation accrue, par rapport aux composites carbone-carbone dans lesquels seule une partie de la matrice de carbone a été remplacée par du carbure de silicium. Les structures composites SiC-SiC voient cependant leur utilisation limitée, en atmosphère oxydante, par la volatilité de la couche protectrice de silice formée en surface — qui devient significative à partir de 1 500 °C environ —, puis à température plus élevée, par la décomposition thermique du carbure de silicium lui-même.

Pour une utilisation à température élevée et en atmosphère oxydante, il est proposé dans le brevet du Royaume-Uni n° 1 353 384 de réaliser un composite de type zircone-zircone ($ZrO_2$). Ce matériau est fabriqué par imprégnation d'une structure en fibres de zircone par une solution contenant un sel de zirconium et une suspension d'oxyde réfractaire suivie d'une pyrolyse à une température suffisante pour transformer le sel de zirconium en zircone. Ce procédé, même avec des cycles répétés imprégnation-pyrolyse, conduit à une matrice aux caractéristiques mécaniques médiocres et comportant une porosité résiduelle importante.

La présente invention a pour but de fournir un procédé permettant d'obtenir un composite alliant un très bon comportement en atmosphère oxydante et aux hautes températures à des caractéristiques mécaniques élevées.

Ce but est atteint grâce à un procédé du type comprenant une densification d'une préforme fibreuse réfractaire en un matériau céramique par une matrice au moins en majeure partie constituée par au moins un oxyde réfractaire ayant une température de fusion supérieure à 1 750 °C, procédé dans lequel, conformément à l'invention, la préforme fibreuse est placée dans une chambre d'infiltration où elle est chauffée au sein d'un mélange gazeux réactif introduit dans la chambre et contenant au moins un agent gazeux d'hydrolyse ou d'oxydation et un composé volatil hydrolysable ou oxydable du ou de chaque élément dont l'oxyde est constitutif de la matrice de la structure à fabriquer, afin de produire par réaction chimique un dépôt adhérent du ou desdits oxydes constitutifs de la matrice, les valeurs de la pression totale, de la température, et de débits gazeux à l'intérieur de la chambre d'infiltration étant choisies à un niveau légèrement supérieur aux valeurs minimales nécessaires à la réalisation de ladite réaction chimique de manière à permettre aux constituants du mélange gazeux réactif de diffuser au fond des pores avant de réagir pour former ledit dépôt adhérent.

Parmi les oxydes ayant une température de fusion supérieure à 1 750 °C, ceux qui sont spécifiquement concernés par la présente invention appartiennent à la série des oxydes réfractaires susceptibles

d'être formés à partir de la phase gazeuse. Il s'agit notamment des oxydes de titane ($TiO_2$, $Ti_2O_3$), de zirconium ($ZrO_2$), de hafnium ($HfO_2$), de thorium ($ThO_2$), d'uranium ($UO_2$), de chrome ($Cr_2O_3$) et d'aluminium ($Al_2O_3$). Toutefois, d'autres oxydes difficiles à former par voie gazeuse,comme les oxydes de beryllium (BeO), de magnésium (MgO) ou de calcium (CaO) pourront entrer pour partie dans la composition de la matrice, leur introduction dans les pores de la préforme fibreuse pouvant se faire de façon connue en soi par imprégnation par voie liquide. La densification de la structure est ensuite achevée par dépôt par infiltration chimique par voie gazeuse d'un des oxydes susceptibles d'être déposés par cette voie, au sein des pores résiduels.

De préférence, la texture fibreuse et/ou la matrice sont au moins en majeure partie constituées par de l'alumine et/ou de la zircone.

Toutefois, en variante, il pourra être utilisé des mélanges d'alumine et de zircone, et d'autres oxydes fondant à plus de 1 750 °C seuls, mélangés entre eux ou mélangés avec de l'alumine ou de la zircone. Il peut être fait appel aussi à des oxydes moins stables thermiquement (par exemple l'oxyde de bore) ajoutés en quantité limitée à un ou plusieurs oxydes fondant à plus de 1 750 °C et infiltrables par voie gazeuse qui restent le constituant essentiel de la texture fibreuse et/ou de la matrice.

Il faut noter que selon le procédé conforme à l'invention, la matrice à base d'oxyde réfractaire est déposée à fond de pores à partir d'une réaction chimique impliquant des réactifs gazeux. Par rapport à la technique de densification par voie liquide indiquée dans le brevet GB 1 353 384 évoqué plus haut, l'oxyde formé par dépôt par voie gazeuse est de meilleure qualité aux plans cristallographique et microstructural ; il est notamment beaucoup moins poreux puisque les pores de très petits diamètres peuvent être infiltrés par voie gazeuse alors qu'ils ne peuvent pas être imprégnés par voie liquide. Il en résulte que les caractéristiques mécaniques de la matrice et, par là-même, de la structure composite sont nettement meilleures.

On notera en outre que la densification par voie gazeuse étant réalisée au sein de la préforme fibreuse dans tout le volume occupé par celle-ci, elle se distingue des techniques de dépôt de revêtements de surface par phases gazeuses. Celles-ci conduiraient en effet à former un revêtement superficiel obstruant les pores et empêchant toute infiltration gazeuse à cœur, d'où l'impossibilité d'obtention d'une très faible porosité résiduelle. De telles techniques de formation de revêtements de surface sont décrites notamment dans le brevet suisse n° 520 209 et le document AD-Report n° 701 013 (AMMRC TR 69-24) octobre 1969 Army Materials and Mechanics Research Center, WATERTOWN, Mass. (US), Ph. WONG et al. : « Chemical Vapor Deposition of Polycristalline Aluminium Oxyde ».

Par rapport aux matériaux de l'art antérieur évoqués plus haut et au plan des caractéristiques, les structures composites obtenues suivant le procédé conforme à l'invention présentent l'avantage de pouvoir être utilisées de manière continue à des températures élevées et dans des milieux chimiquement très agressifs eu égard à la grande stabilité chimique d'oxydes réfractaires tels que l'alumine et la zircone déposées par voie gazeuse. Elles possèdent, par ailleurs, vis à vis des céramiques frittées non renforcées correspondantes, une meilleure tenue aux chocs thermo-mécaniques dans la mesure où la présence d'une ossature fibreuse contribue à arrêter la propragation des fissures et permet une dissipation d'énergie par déchaussement au niveau des interfaces fibres-matrice.

Pour réaliser la densification de la préforme fibreuse, on place celle-ci dans une chambre d'infiltration où elle est chauffée au sein du mélange gazeux réactif qui est introduit dans la chambre. Par réaction chimique à l'intérieur des pores de la texture fibreuse, il se produit un dépôt adhérent d'oxyde. Les valeurs de pression totale, pressions partielles, température et débit gazeux à l'intérieur de la chambre d'infiltration sont choisies à un niveau légèrement supérieur aux valeurs minimales nécessaires à la réalisation de la réaction chimique de manière que la cinétique du processus soit contrôlée par les réactions de surface (et non pas par les transferts dans la phase gazeuse) pour permettre aux constituants du mélange gazeux réactif de diffuser au fond des pores avant de réagir.

La texture fibreuse de départ ou préforme doit être en un matériau chimiquement ou physiquement compatible avec la matrice d'oxyde aux températures d'infiltration et d'utilisation. Divers matériaux fibreux de type céramique peuvent convenir, par exemple le carbure de silicium ; toutefois, les matériaux préférés sont ceux du type oxydes, notamment des fibres constituées essentiellement d'alumine ou de zircone. En ce qui concerne l'alumine, il est préférable d'utiliser des fibres essentiellement constituées de corindon plutôt que des fibres vitreuses et/ou contenant une quantité excessive de silice ou/et d'oxyde de bore. Ces dernières ont en effet tendance à évoluer aux températures d'infiltration d'autant plus que les durées de maintien en température sont très importantes.

Compte-tenu des considérations de compatibilité, les associations préférées sont d'abord une texture fibreuse d'alumine dans une matrice d'alumine, puis une texture fibreuse d'alumine dans une matrice de zircone et une texture fibreuse de zircone dans une matrice de zircone.

La préforme doit comporter une porosité ouverte suffisante, d'autant plus importante que la structure composite doit avoir, après fabrication, une fraction volumique élevée de matrice de type oxyde. Cette porosité se présente sous la forme de pores de diamètre supérieur à quelques micromètres, les pores les plus petits étant les plus difficiles à densifier complètement. Les fibres constitutives de la préforme peuvent être disposées de différentes manières selon les applications envisagées. Elles peuvent ainsi être employées sous la forme de feutres, de mats, de fils, de tissus ou de baguettes et disposées de manière aléatoire ou, au contraire, suivant certaines directions de l'espace (tissages multidirectionnels). Ces

différentes dispositions sont bien connues dans le domaine des renforts fibreux pour structures composites.

Les fibres doivent être maintenues rigidement les unes par rapport aux autres avant et pendant le début de l'opération de densification par voie gazeuse. Cette condition peut être remplie soit en maintenant les fibres à l'aide d'un outillage qui sera ultérieurement enlevé dès que l'infiltration chimique par voie gazeuse aura suffisamment lié les fibres entre elles, soit en faisant appel à un prétraitement de consolidation par voie liquide. Dans le premier cas, la densification de la préforme — dite sèche — est entièrement réalisée par dépôt chimique en phase gazeuse. Dans le second cas, la phase de dépôt chimique en phase gazeuse, qui caractérise le procédé conforme à l'invention n'intervient qu'après une prédensification à l'aide de procédés par voie liquide connus en eux-mêmes. Cette prédensification consiste en une opération d'imprégnation en phase liquide suivie d'une cuisson, les fibres étant maintenues dans un moule (ou dans un outillage). Il est avantageux d'utiliser comme agent de consolidation un précurseur liquide du matériau qui sera ultérieurement déposé par voie gazeuse ou susceptible de conduire à un matériau proche de ce dernier. De tels précurseurs, tels que les gels d'hydroxyde (ou d'alcooxydes) ou composés organiques hydrolysables, sont des produits bien connus, notamment dans le cas de l'alumine, de la zircone et des produits à base d'alumine et de zircone. Leur décomposition thermique, au cours de la cuisson qui suit l'imprégnation par voie liquide, laisse dans les interstices un résidu solide qui cimente les fibres entre elles tout en contribuant à diminuer la porosité initiale — généralement très élevée — des textures réalisées à l'aide de produits fibreux, jusqu'à atteindre une porosité résiduelle ouverte comprise entre 30 et 60 %. Outre l'alumine et la zircone, le matériau de consolidation obtenu après cuisson peut appartenir au groupe des oxydes des éléments suivants : magnésium, calcium, chrome, yttrium, titane, hafnium, thorium et uranium. Compte-tenu de ce qui a été dit plus haut, les opérations de préparation de la préforme fibreuse, lorsqu'elles font appel à une consolidation ou à une prédensification par voie liquide suivie d'une cuisson, doivent laisser une porosité résiduelle suffisante formée de pores ouverts. Aussi, et contrairement à ce qu'indique le brevet GB 1 353 384 déjà cité, la quantité d'agent de consolidation utilisée est choisie par exemple juste nécessaire pour réaliser la liaison des fibres entre elles tout en conservant une porosité ouverte suffisante pour que le matériau final présente toutes les caractéristiques mécaniques propres aux oxydes déposés par voie gazeuse.

La densification de la préforme poreuse par infiltration chimique en phase gazeuse doit être conduite impérativement de sorte que le dépôt d'oxyde réfractaire (par exemple à base d'alumine et/ou de zircone) se fasse sélectivement à fond de pores pour combler progressivement les pores suivant toute leur longueur, et non à la surface externe de la préforme, ce qui aurait évidemment pour effet de fermer rapidement l'entrée des pores sans pour autant conduire à la densification. Il s'agit donc ici de déposer au cœur d'un milieu fibreux poreux, par infiltration en phase gazeuse, des quantités très importantes d'alumine, ou de matériau à base d'oxydes fondant à plus de 1 750 °C et susceptibles d'être formés à partir d'une phase gazeuse. En effet, dans le cas extrême des préformes sèches constituées d'un feutre serré de fibres, par exemple d'alumine ou de zircone, la porosité initiale à remplir par infiltration peut atteindre 70 à 80 %. Dans un autre ordre d'idée, en fin de densification, le dépôt d'oxyde doit pouvoir se faire au sein de pores dont le diamètre devient de plus en plus petit pour obtenir une porosité finale aussi réduite que possible et, par conséquent, de bonnes propriétés mécaniques. La présente invention se démarque donc très nettement des procédés de dépôt d'alumine connus utilisés pour réaliser des dépôts en surface de films minces. Cette infiltration à fond de pores n'est possible que par un choix approprié de la nature et de la composition du mélange gazeux réactif et des conditions d'infiltration, ainsi que cela sera précisé plus loin.

La formation d'un oxyde réfractaire à partir d'un mélange gazeux réactif implique la présence d'au moins une combinaison volatile oxydable ou hydrolysable de l'élément considéré ainsi que d'une espèce chimique gazeuse susceptible de l'oxyder ou de l'hydrolyser à la températre d'infiltration. Les éléments formant des oxydes fondant à plus de 1 750 °C présentent, pour la plupart des combinaisons volatiles à température modérée. Il s'agit principalement des halogénures (fluorures, chlorures, bromures et iodures) et des combinaisons organo-métalliques. A titre d'illustration, on citera, dans le cas de l'aluminium et du zirconium : les fluorures, chlorures, bromures et iodures $AlX_3$ et $ZrX_4$ (avec X = F, Cl, Br ou I) ou les composés organo-métalliques comme les triméthyl, triéthyl, tri-isopropyl, ou tri-isobutyl aluminium, ainsi que les isopropyl ou butyl secondaire zirconium. Ces combinaisons peuvent être soit directement oxydées par de l'oxygène dans des conditions contrôlées de pressions partielles, soit hydrolysées à haute température par de la vapeur d'eau éventuellement formée in-situ à l'aide d'une réaction chimique. Cette dernière méthode est particulièrement indiquée ici dans la mesure où elle permet de former l'alumine uniquement au contact immédiat de la pièce à densifier portée à haute température. Un gaz inerte, azote ou argon par exemple, peut également être ajouté au mélange gazeux, comme gaz porteur ou comme simple diluant.

Bien que de nombreux mélanges gazeux puissent être utilisés pour former un dépôt d'oxyde réfractaire tel que l'alumine ou la zircone, celui qui est préféré dans la mise en œuvre du procédé selon l'invention est constitué, pour l'essentiel, de chlorure d'aluminium (ou de zirconium), de dioxyde de carbone et d'hydrogène. Il est vraisemblable que la formation des oxydes résulte des bilans réactionnels suivants :

$$3\ H_{2(g)} + 3\ CO_{2(g)} \rightleftarrows 3\ H_2O_{(g)} + 3\ CO_{(g)} \qquad (1)$$

$$2\ AlCl_{3(g)} + 3\ H_2O_{(g)} \rightarrow Al_2O_{3(s)} + 6\ HCl_{(g)} \qquad (2)$$

$$2\ AlCl_{3(g)} + 3\ H_{2(g)} + 3\ CO_{2(g)} \rightarrow Al_2O_{3(s)} + 3\ CO_{(g)} + 6\ HCl_{(g)} \qquad (3)$$

ou dans le cas de la zircone :

$$2\ H_{2(g)} + 2\ CO_{2(g)} \rightleftarrows 2\ H_2O_{(g)} + 2\ CO_{(g)} \qquad (1)$$

$$ZrCl_{4(g)} + 2\ H_2O_{(g)} \rightarrow ZrO_{2(s)} + 4\ HCl_{(g)} \qquad (2')$$

$$ZrCl_{4(g)} + 2\ H_{2(g)} + 2\ CO_{2(g)} \rightarrow ZrO_{2(s)} + 2\ CO_{(g)} + 4\ HCl_{(g)} \qquad (3')$$

L'intérêt de faire appel à ce type de mélange gazeux réside dans le fait que la formation de l'eau suivant (1) est lente et ne devient appréciable, cinétiquement, qu'en opérant à température suffisamment élevée, alors qu'en revanche la formation de l'alumine ou de la zircone suivant (2) ou (2') est rapide. Si l'on remarque qu'au cours d'une infiltration, les espèces chimiques doivent pouvoir atteindre le fond des pores par diffusion en phase gazeuse avant de réagir, on réalise tout l'avantage que présentent de tels systèmes dans lesquels la formation de l'eau est retardée par des facteurs de cinétique.

Comme indiqué plus haut, il est essentiel d'éviter, en cours d'infiltration, qu'un dépôt de surface obstrue prématurément l'orifice des pores, ce qui arrêterait le processus de densification à cœur.

Le dépôt à fond de pores est favorisé par rapport au dépôt de surface en abaissant la pression totale, la température de dépôt et, à un degré moindre, le débit des gaz dans la chambre d'infiltration. Dans de telles conditions, le dépôt n'est plus contrôlé par le transport par diffusion dans la phase gazeuse des espèces initiales, transitoires ou issues de la réaction de dépôt mais par la cinétique des réactions de surface entre espèces adsorbées. Il en résulte que les espèces initiales ou transitoires peuvent alors atteindre le fond des pores avant de réagir : l'abaissement de la pression totale augmente le libre parcours moyen des molécules et facilite leur diffusion en profondeur au fond des pores ; de plus, lorsqu'il est conjugué à un abaissement de la température de dépôt, il augmente la durée de vie des espèces initiales ou transitoires leur permettant ainsi d'atteindre le fond des pores. Dans cette optique, et c'est sur ce point que les conditions d'infiltration se différencient de celles correspondant à des dépôts de surface, température d'infiltration, pression totale et à un degré moindre débit des gaz sont abaissés aux valeurs minimales permettant néanmoins une vitesse de densification acceptable. Ces conditions sont d'autant plus impératives que la porosité restant à remplir est constituée de pores plus fins et plus longs. Il en résulte que la densification complète d'une texture fibreuse par un oxyde réfractaire suivant le procédé d'infiltration chimique en phase gazeuse est une opération relativement longue (puisque dans son principe même, elle implique que la cinétique des réactions de surface ait été considérablement abaissée). C'est ainsi que, si la vitesse de dépôt peut être assez élevée en début d'opération, lorsque la porosité disponible est très importante, elle devient en revanche de plus en plus lente au fur et à mesure que les pores se rétrécissent. Les exemples figurant plus loin montrent que si l'infiltration est bien conduite, la porosité résiduelle finale (pores occlus ou trop fins pour être infiltrés) est très faible (moins de 10 % environ).

A titre d'illustration, lorsque le mélange gazeux réactif est formé de chlorure d'aluminium et/ou de chlorure de zirconium, de dioxyde de carbone et d'hydrogène, l'infiltration est réalisée à une température comprise entre 800 et 1 200 °C et de préférence à 900-950 °C, sous une pression totale comprise entre $66 \cdot 10^{-4}$ et 0,40 atm ($65 \cdot 10^{-4}$ et 0,39 bar ; 5 à 300 torrs) et de préférence entre 0,013 et 0,065 atm (0,013 et 0,64 bar ; 10 à 50 torrs). Le débit gazeux total dépend de la géométrie de la chambre d'infiltration et de la nature des pièces à densifier ; il est, à titre d'exemple, de l'ordre de 100 $cm^3$/minute pour un réacteur cylindrique de 60 mm de diamètre et de 110 mm de hauteur.

Un dépôt mixte contenant à la fois de l'alumine et de la zircone peut être réalisé en mélangeant à la fois du chlorure d'aluminium et du chlorure de zirconium avec du dioxyde de carbone et de l'hydrogène pour former le mélange gazeux initial. Dans ce cas, le mélange $AlCl_3$-$ZrCl_4$ contient par exemple de 5 à 20 % en mole de $AlCl_3$.

Au lieu de l'alumine ou de la zircone, on peut envisager le dépôt d'autres oxydes réfractaires fondant à plus de 1 750 °C, par le procédé qui vient d'être décrit, à condition de pouvoir disposer d'une combinaison volatile minérale ou organo-métallique de l'élément correspondant à l'oxyde. Tel est notamment le cas des oxydes : $Ti_2O_3$, $Cr_2O_3$, $HfO_2$, $ThO_2$ ou $UO_2$ ainsi que de la silice (bien que cette dernière ait une température de fusion légèrement inférieure à 1 750 °C). De la même manière, il est possible de densifier une texture fibreuse poreuse à l'aide d'oxydes binaires ou ternaires dérivés des oxydes simples qui viennent d'être énumérés, ou à l'aide de mélanges associant ces oxydes (ou leurs combinaisons) entre eux ou avec des oxydes moins réfractaires ($B_2O_3$ par exemple) mais susceptibles de modifier avantageusement les propriétés des dépôts, en vue d'applications spécifiques, lorsqu'ils sont ajoutés en petites quantités aux oxydes fondant à plus de 1 750 °C. Dans ces divers cas, il est fait appel à des mélanges gazeux initiaux contenant, en plus du dioxyde de carbone et de l'hydrogène, les combinaisons volatiles nécessaires au transport par voie gazeuse des divers éléments — autres que

l'oxygène — constitutifs du dépôt réfractaire. De même, en vue de conférer aux composites certaines propriétés particulières, la matrice peut présenter un gradient de composition à partir des fibres. Dans ce cas, la composition du mélange gazeux utilisé pour l'infiltration varie en fonction du temps, soit de manière continue, soit de manière discontinue, suivant l'application envisagée.

Dans le cas des structures composites à matrice d'alumine, il est avantageux que celle-ci soit constituée de corindon, $Al_2O_3 - \alpha$, stable jusqu'au point de fusion et doté de meilleures caractéristiques que les autres variétés de l'alumine. La nature de l'alumine déposée à fond de pores au cours du processus d'infiltration dépend principalement de la température. Aux températures inférieures à 900 °C environ, les dépôts contiennent des alumines de transition plus ou moins bien cristallisées. En revanche, au-dessus de 900 °C environ, les dépôts sont principalement constitués de corindon.

Dans le cas des structures composites à matrice à base de zircone pure, $ZrO_2$ se trouve sous forme monoclinique ou quadratique aux températures d'infiltration retenues (environ 950 °C). En raison de l'effet brisant de la transformation $ZrO_{2(m)} \rightleftarrows ZrO_{2(q)}$ (dû à la variation de volume accompagnant la transformation et à son caractère martensitique), les céramiques massives à base de $ZrO_2$ doivent être réalisées à l'aide de zircones partiellement ou totalement stabilisées (à l'aide d'ajouts de petites quantités d'oxydes comme CaO, MgO, $Y_2O_3$). La zircone peut, dans la plupart des cas et notamment lorsque sa fraction volumique demeure relativement faible dans le composite, être déposée sous forme pure — c'est-à-dire non stabilisée — dans la mesure où elle est infiltrée dans un réseau de pores très fins au sein d'une texture fibreuse mécaniquement très résistante.

Néanmoins, si dans certains cas, il s'avère nécessaire que la matrice soit constituée pour l'essentiel de zircone stabilisée (structures composites à fraction volumique élevée de matrice, par exemple), l'infiltration est alors effectuée par un dépôt mixte de zircone et d'un oxyde stabilisant de la zircone et vapo-déposable chimiquement. En variante, il peut être fait appel à une densification où alternent infiltrations chimiques par voie gazeuse pour $ZrO_2$ et imprégnation par voie liquide d'un précurseur de l'oxyde stabilisant suivie d'une cuisson, si l'oxyde stabilisant ne peut être commodément fourni par voie gazeuse (CaO, MgO, $Y_2O_3$ par exemple). Il demeure que dans ce dernier cas l'imprégnation par voie liquide a pour unique but d'apporter la quantité requise d'oxyde stabilisant, les propriétés mécaniques du matériau final et sa compacité élevée étant la conséquence, à titre principal, de la densification par voie gazeuse.

On se référera maintenant à la figure unique annexée qui représente schématiquement une installation permettant la mise en œuvre du procédé d'infiltration décrit ci-avant.

On envisage à titre indicatif, mais non limitatif le cas où le mélange gazeux réactif est constitué essentiellement d'un chlorure métallique — d'aluminium ($AlCl_3$) ou de zirconium ($ZrCl_4$) —, de dioxyde de carbone ($CO_2$), d'hydrogène ($H_2$) et d'un gaz inerte (argon).

Les gaz sont amenés dans une chambre d'infiltration 1 au moyen de lignes à gaz comportant, comme connu en soi, des vannes d'arrêt 2, des débit-mètres 3 et des vannes de réglage 4.

Le chlorure métallique est obtenu en faisant réagir du chlore (ou du chlorure d'hydrogène HCl) amené par un conduit 6 sur des copeaux du métal correspondant dans un chlorureur 5. La réaction de formation du chlorure métallique est conduite vers 280 °C dans le cas de $AlCl_3$ et vers 400 °C dans celui de $ZrCl_4$. Le chlorure métallique volatil produit en 5 est amené à la chambre d'infiltration par une conduite 7 qui est thermostatée pour éviter la condensation du chlorure métallique.

Les autres composants du mélange gazeux réactif sont acheminés à travers des conduits 8, 9, 10 qui rejoignent la conduite thermostatée 7 en amont de la chambre d'infiltration 1.

Une ou plusieurs préformes à densifier 11 sont placées à l'intérieur d'une enveloppe 12 qui est en un matériau réfractaire et conducteur compatible chimiquement avec l'atmosphère régnant dans la chambre 1, et qui est portée à haute température par induction de courant à haute fréquence circulant dans un inducteur 13.

A la sortie de la chambre d'infiltration 1, dont les parois sont thermostatées, les chlorures métalliques volatils présents dans le mélange gazeux initial et qui n'ont pas réagi, ainsi que ceux qui ont pu se former en cours de réaction (sous-chlorures de zirconium, par exemple), sont condensés dans un récipient 14. Le chlorure d'hydrogène HCl produit est neutralisé par de la soude contenue dans un récipient 15 tandis que les gaz restants, dont l'oxyde de carbone produit et éventuellement l'argon, sont extraits par une conduite 16 au moyen d'une pompe 17.

Une vanne 18 est montée sur la conduite 16 afin de régler le débit de gaz extraits pour maintenir à la valeur désirée la pression totale dans la chambre 1, pression mesurée par un appareil 19. On pourra utiliser une électrovanne 18 commandée automatiquement par une chaîne d'asservissement recevant d'une part, un signal représentant la pression désirée dans la chambre 1 et , d'autre part, un signal fourni par un capteur de pression et représentant la pression réelle dans la chambre 1.

De façon semblable, une régulation en température est réalisée au moyen d'une chaîne d'asservissement 21 qui est connectée à un capteur de température 22 logé dans la chambre 1 et qui commande la puissance électrique fournie à l'inducteur 13.

L'installation décrite permet donc d'effectuer une infiltration gazeuse isotherme avec régulation de la pression totale et séparation des gaz condensables ou dont le rejet dans l'atmosphère est dangereux.

L'invention sera maintenant plus particulièrement illustrée à l'aide de quelques exemples donnés ci-après à titre indicatif mais non limitatif.

Exemple 1

Des structures composites à matrice d'alumine et à renfort unidirectionnel de fibres d'alumine (fibres de type commercialisé sous la dénomination « FP » par la firme des Etats-Unis d'Amérique « Du Pont de Nemours ») ont été réalisées par infiltration chimique en phase gazeuse, à partir d'un mélange gazeux contenant du chlorure d'aluminium, du dioxyde de carbone et de l'hydrogène. Les produits fibreux de départ étaient constitués de préformes sèches parallélépipédiques de 100 millimètres de longueur et de $50 \times 30$ mm$^2$ de section maintenues par un outillage et présentant une porosité de 60 %. Au sein de ces préformes, les fibres étaient disposées parallèlement les unes aux autres suivant la grande longueur. Ces préformes ont été placées dans la chambre d'infiltration et soumises à des cycles de densification à l'aide d'un mélange gazeux dont la composition était : 10 % $AlCl_3$, 30 % $CO_2$ et 60 % $H_2$ alors que leur température T était fixée à 950 °C, que la pression totale p dans la chambre d'infiltration était maintenue à $26 \cdot 10^{-3}$ atm (20 torrs) et que le débit gazeux total D était fixé à 100 cm$^3$/mn. La densification a été poursuivie durant 300 heures.

Les structures composites ainsi obtenues ont été soumises à divers types d'analyses physico-chimiques. L'analyse de coupes métallographiques, au microscope optique et au microscope électronique à balayage a permis d'établir que l'infiltration était homogène au sein d'une préforme, l'alumine s'étant uniformément déposée dans le réseau de pores, sans accumulation notable au voisinage de la surface externe de la préforme. La porosité résiduelle était de l'ordre de 10 % et aurait pu être encore abaissée en prolongeant la durée d'infiltration, comme en témoignait l'évolution de la prise de poids en fonction du temps. L'analyse radiocristallographique et l'analyse élémentaire à la microsonde à spectrométrie X ont permis d'établir que le produit déposé à l'intérieur des pores était bien pour l'essentiel du coridon $Al_2O_3 - \alpha$.

Une caractérisation mécanique en flexion trois points a été effectuée sur des éprouvettes ($50 \times 12 \times 2{,}5$ mm) taillées dans les structures après infiltration. La résistance à la flexion à température ambiante a été trouvée égale à 210 MPa pour une porosité résiduelle de 10-12 %. Les mesures de résistance à la flexion en fonction de la porosité $v_p$ ($35\ \% < v_p < 10\ \%$) extrapolées à porosité résiduelle nulle laissaient à penser que des résistances à la flexion proches de 300 MPa auraient pu être obtenues en prolongeant l'infiltration jusqu'à densification complète.

Des essais de flexion réalisés en fonction de la température ont montré par ailleurs qu'une fraction notable de la résistance déterminée à température ambiante était conservée à haute température : 85 % à 1 000 °C, 60 % à 1 200 °C.

Cet exemple montre donc que le procédé de fabrication selon l'invention permet d'élaborer par infiltration chimique en phase gazeuse, des structures composites alumine-alumine caractérisées par une matrice de compacité élevée et performante sur le plan thermomécanique.

Exemple 2 (exemple comparatif)

On a procédé comme indiqué dans l'exemple 1 en utilisant les mêmes préformes fibreuses, le même appareillage, le même mélange gazeux, la même pression totale p, le même débit total D, mais la température T des préformes a été portée à 1 200 °C. Dans ces conditions, il a été observé qu'au bout d'une dizaine d'heures, un dépôt d'alumine s'était formé à la surface externe de la préforme qui obstruait les orifices des pores et interdisait toute infiltration en profondeur supplémentaire.

Exemple 3 (exemple comparatif)

On a procédé de nouveau comme indiqué dans l'exemple 1, mais la pression totale p à l'intérieur de la chambre d'infiltration a été maintenue à environ 0,5 atm, tous les autres paramètres demeurant inchangés. Au bout de cinq heures seulement de traitement, il a été observé la formation d'un dépôt de surface, analogue à celui rapporté pour l'exemple 2, obstruant les orifices des pores et interdisant toute densification suppémentaire.

Les exemples 1 à 3 montrent clairement que l'obtention de structures de composites à matrice d'alumine à partir de préformes fibreuses poreuses soumises à un traitement de densification par voie gazeuse suppose des conditions très précises. Si ces conditions ne sont pas observées (c'est-à-dire $800 < T < 1\,200$ °C et de préférence $900 < T < 950$ °C, d'une part, et $66 \cdot 10^{-4} < p < 0{,}40$ atm et de préférence $0{,}02 < p < 0{,}06$ atm, d'autre part) l'alumine, au lieu de se former au sein des pores, se dépose à la surface externe des préformes et ne conduit pas à une densification de ces dernières.

L'infiltration de l'alumine par voie gazeuse au sein des pores de la préforme, réalisée conformément à l'invention se distingue donc bien des procédés de revêtements externes même s'ils font appel à des mélanges gazeux de composition voisine.

Exemple 4

Des préformes fibreuses analogues à celles considérées précédemment ont été consolidées et prédensifiées par voie liquide — afin de diminuer la porosité initiale — puis soumises au traitement

d'infiltration par voie gazeuse ainsi qu'il est décrit dans l'exemple 1. Cette consolidation a été obtenue en imprégnant, à la pression atmosphérique, chaque préforme sèche maintenue dans un outillage, à l'aide d'un gel d'hydroxyde d'aluminium obtenu par hydrolyse de butylate secondaire d'aluminium. Après imprégnation, séchage et calcination à l'air (1 100 °C) répétés, la porosité a pu être abaissée à 50 %. Les préformes ainsi traitées, qui n'ont plus à être maintenues dans un outillage, ont été densifiées par voie gazeuse suivant les conditions indiquées à l'exemple 1.

Les analyses ont montré que l'alumine déposée au sein des pores lors des cycles d'imprégnation par voie liquide se trouvait cimentée très solidement par celle qui a été formée ultérieurement par voie gazeuse. L'avantage de ce procédé est de diminuer la durée de l'opération d'infiltration chimique par voie gazeuse, sans diminuer pour autant de manière notable les performances mécaniques finales largement imposées par la présence de l'alumine déposée par voie gazeuse. Ainsi il n'a fallu que 180 heures d'infiltration pour aboutir à une porosité résiduelle finale de l'ordre de 10 %.

## Exemple 5

Des structures composites à matrice de zircone et à renfort fibreux unidirectionnel d'alumine ont été réalisées par infiltration chimique en phase gazeuse à partir d'un mélange gazeux contenant du tétrachlorure de zirconium, du dioxyde de carbone et de l'hydrogène. Les produits de départ étaient constitués de préformes fibreuses d'alumine analogues à celles considérées à l'exemple 1 mais qui avaient été pré-densifiées par voie gazeuse par de l'alumine de manière à lier les fibres et abaisser leur porosité à 25 %. Ces préformes ont été placées dans la chambre d'infiltration et densifiées à l'aide d'un mélange gazeux dont la composition était : 10 % $ZrCl_4$, 30 % $CO_2$ et 60 % $H_2$, les paramètres T et p étant fixés comme indiqué à l'exemple 1 et le débit total des gaz abaissé à 50 $cm^3$/mn. La densification a été poursuivie durant 200 heures de manière à aboutir à une porosité résiduelle de 5-10 %.

L'analyse a montré que les structures composites ainsi obtenues conservaient leur intégrité après cyclage thermique de l'ambiante à 1 200 °C, sans fissuration excessive en dépit du fait que la zircone présente dans la matrice était sous forme non stabilisée.

## Exemple 6

Des structures composites à matrice mixte zircone-alumine et à renfort fibreux unidirectionel d'alumine ont été réalisées par infiltration chimique en phase gazeuse à partir d'un mélange gazeux contenant $ZrCl_4$, $AlCl_3$, $CO_2$ et $H_2$. Les produits de départ étaient constitués de préformes fibreuses analogues à celles considérées à l'exemple 1. Ces préformes ont été densifiées à l'aide d'un mélange gazeux de composition : 5 % $ZrCl_4$, 5 % $AlCl_3$, 30 %$CO_2$ et 60 % $H_2$, les paramètres T et p étant fixés comme indiqué à l'exemple 1 et le débit total des gaz maintenu à 70 $cm^3$/mn. La densification a été poursuivie durant 350 heures de manière à aboutir à une porosité résiduelle de 10 %.

L'analyse a montré que la matrice était constituée de zircone contenant environ 55 % d'alumine et 45 % de zircone, en moles.

## Exemple 7

Des structures zircone-zircone à compacité élevée ont été réalisées par infiltration chimique en phase gazeuse à partir d'un mélange gazeux $ZrCl_4—CO_2—H_2$. Les produits de départ étaient constitués de fibres de zircone maintenues alignées parallèlement les unes aux autres à l'aide d'un outillage. Les essais ont porté sur des préformes de 60 mm de longueur et de 30 × 15 $mm^2$ de section, les fibres étant orientées préférentiellement suivant la longueur. La porosité initiale des préformes était de 70 % environ. Elle a été abaissée à 50 % à l'aide de cycles imprégnation-pyrolyse, en faisant appel à un gel d'hydroxyde de zirconium obtenu à partir du butylate secondaire de zirconium, comme déjà indiqué à l'exemple 4 dans le cas de l'alumine. Les préformes ainsi consolidées ont été infiltrées chimiquement par voie gazeuse, les paramètres d'infiltration étant fixés comme indiqué à l'exemple 5. L'infiltration a été poursuivie durant 300 heures, de manière à abaisser la porosité résiduelle à 10 %.

Les coupes métallographiques et l'analyse au microscope électronique à balayage ont montré que la zircone déposée par voie gazeuse dans la seconde partie du procédé s'était déposée à la fois dans la microporosité présente au sein de la zircone formée par pyrolyse du gel d'hydroxyde et également dans les macropores qui n'avaient pas été comblés par les cycles imprégnation-pyrolyse. Ainsi, la matrice se trouvait constituée de manière homogène de zircone, celle formée par voie gazeuse ayant consolidé celle — très poreuse — issue du gel d'hydroxyde.

Un essai de flexion trois points réalisé à la température ambiante sur une éprouvette de 50 × 12 × 2,5 mm a donné une résistance à la flexion de 190 MPa pour une porosité résiduelle de 12 %. Des valeurs encore plus élevées de résistance à la flexion auraient sans doute été observées si la densification avait été menée à son terme.

Dans le cas du dépôt de la matrice de zircone, l'utilisation du procédé conforme à l'invention, c'est-à-dire infiltration chimique à partir d'un mélange gazeux ($ZrCl_4—CO_2—H_2$), conduit à une zircone compacte (faible porosité résiduelle) qui présente de bonnes propriétés mécaniques. Au contraire, le

procédé d'imprégnation par voie liquide conduit à une zircone poreuse aux propriétés mécaniques médiocres. A titre d'exemple, le procédé décrit dans le brevet GB-1 353 384 conduit à une structure ayant une porosité résiduelle de 32 % correspondant à une résistance à la flexion d'environ 42 à 55 MPa.

**Revendications**

1. Procédé de fabrication d'une structure composite réfractaire, comprenant la densification d'une préforme fibreuse réfractaire en matériau céramique par une matière au moins en partie constituée par un oxyde ayant une température de fusion supérieure à 1 750 °C, caractérisé en ce que la préforme fibreuse est placée dans une chambre d'infiltration où elle est chauffée au sein d'un mélange gazeux réactif introduit dans la chambre et contenant au moins un agent gazeux d'hydrolyse ou d'oxydation et un composé volatil hydrolysable ou oxydable du ou de chaque élément dont l'oxyde est constitutif de la matrice de la structure à fabriquer, afin de produire par réaction chimique un dépôt adhérent du ou desdits oxydes constitutifs de la matrice, les valeurs de la pression totale, de la température, et de débits gazeux à l'intérieur de la chambre d'infiltration étant choisies à un niveau légèrement supérieur aux valeurs minimales nécessaires à la réalisation de ladite réaction chimique de manière à permettre aux constituants du mélange gazeux réactif de diffuser au fond des pores avant de réagir pour former ledit dépôt adhérent.

2. Procédé selon la revendication 1, caractérisé en ce que la préforme fibreuse est consolidée avant infiltration gazeuse afin de lier les fibres entre elles, la consolidation étant réalisée par au moins un cycle comprenant l'imprégnation par voie liquide d'un précurseur d'un matériau réfractaire ayant une bonne tenue à l'oxydation et fondant à plus de 1 750 °C, puis la cuisson du précurseur, de manière à obtenir une porosité résiduelle ouverte comprise entre 20 et 50 %.

3. Procédé selon la revendication 2, caractérisé en ce que le matériau de consolidation obtenu après cuisson appartient au groupe constitué par les oxydes des éléments suivants : magnésium, calcium, aluminium, chrome, yttrium, titane, zirconium, hafnium, thorium et uranium.

4. Procédé selon l'une quelconque des revendications 2 et 3, caractérisé en ce que le précurseur du matériau de consolidation est un précurseur de type gel d'hydroxyde ou d'alcooxyde.

5. Procédé selon l'une quelconque des revendications 1 à 4, caractérisé en ce que ledit composé volatil hydrolysable ou oxydable est un halogénure.

6. Procédé selon la revendication 5, caractérisé en ce que l'halogénure est choisi dans le groupe que forment les chlorures d'aluminium et de zirconium.

7. Procédé selon l'une quelconque des revendications 1 à 4, caractérisé en ce que ledit composé volatif hydrolysable ou oxydable est un composé organo-métallique.

8. Procédé selon la revendication 1, caractérisé en ce que le mélange gazeux réactif est constitué spécifiquement d'au moins un des chlorures d'aluminium et de zirconium, de dioxyde de carbone et d'hydrogène, la pression totale dans la chambre d'infiltration est maintenue à une valeur située dans l'intervalle $66 \cdot 10^{-4}$ atm, $65 \cdot 10^{-4}$ à 0,39 bar, de préférence entre 0,013 et 0,065 atm (0,013 et 0,064 bar) et la température de la préforme est fixée à une valeur située dans l'intervalle 800-1 200 °C, de préférence entre 900 et 950 °C.

9. Procédé selon la revendication 8, caractérisé en ce que le mélange gazeux réactif comporte du chlorure d'aluminium et du chlorure de zirconium et le mélange $AlCl_4$-$ZrCl_4$ contient de 5 à 20 % en mole de $AlCl_3$.

10. Procédé selon la revendication 1, pour former une matrice constituée en majeure partie de zircone ($ZrO_2$) partiellement ou totalement stabilisée à l'aide d'un oxyde d'un élément du groupe constitué par le magnésium, le calcium et l'yttrium, caractérisé en ce que l'on fait alterner une séquence d'imprégnation à l'aide d'un précurseur du type gel de l'oxyde stabilisant suivie d'une cuisson du précurseur résultant en un oxyde poreux, avec une séquence d'infiltration chimique par voie gazeuse de zircone, celle-ci se déposant au sein des pores de la préforme et de l'oxyde stabilisant afin de former une matrice compacte de zircone partiellement ou totalement stabilisée.

11. Structure obtenue par le procédé selon la revendication 1, caractérisée en ce que la matrice est constituée d'au moins un oxyde déposé en phase gazeuse d'un élément du groupe formé par l'aluminium, le zirconium, le chrome, le titane, l'hafnium, le thorium et l'uranium.

12. Structure selon la revendication 11, caractérisée en ce que la texture fibreuse est au moins en majeure partie constituée par un composé du groupe formé par l'alumine, la zircone et le carbure de silicium.

13. Structure selon la revendication 11, caractérisée en ce que la texture fibreuse est en aluminine pure et la matrice est constituée par au moins un oxyde déposé en phase gazeuse du groupe formé par l'alumine pure et la zircone pure.

14. Structure selon la revendication 13, caractérisée en ce que l'alumine pure est du type corindon.

15. Structure selon l'une quelconque des revendications 11 à 14, caractérisée en ce que la matrice est en zircone déposée en phase vapeur au moins en partie stabilisée par addition d'une petite quantité d'un oxyde stabilisant d'un élément du groupe formé par le calcium, le magnésium et l'yttrium.

**Claims**

1. Method for producing a refractory composite structure, comprising the densification of a refractory fibrous preform in ceramic material by a material at least partly constituted by an oxide having a melting point higher than 1,750 °C, characterized in that the fibrous preform is placed inside an infiltration chamber where it is heated within a reacting gaseous mixture introduced into the chamber and containing at least one gaseous hydrolyzing or oxiding agent and a volatile hydrolyzable or oxidizable compound of the one element or of each element of which the oxide is a constituent of the matrix of the structure to be produced, in order to obtain by chemical reaction an adhesive deposit of said oxide or oxides constituting said matrix, the values of the overall pressure, of the temperature and of the gas flow rates inside the infiltration chamber being selected to be at a level slightly higher than the minimum values necessary for producing the said chemical reaction, so as to enable the constituents of the gaseous reaction mixture to spread to the bottom of the pores before reacting to form said adhesive deposit.

2. Method according to claim 1, characterized in that the fibrous preform is rigidized before conducting the chemical vapor infiltration in oder to bind the fibers together, said rigidization being achieved by at least one cycle comprising liquid impregnation with a precursor of a refractory material having a good resistance to oxidization and melting at more than 1,750 °C, followed by the firing of said precursor, so as to reach an open residual porosity comprised between 20 and 50 %.

3. Method according to claim 2, characterized in that the rigidizing material obtained after firing belongs to the group constituted by oxides of the following elements : magnesium, calcium, aluminium, chromium, yttrium, titanium, zirconium, hafnium, thorium and uranium.

4. Method according to anyone of claims 2 and 3, characterized in that the precursor of the rigidizing material is a precursor of the hydroxide or alcoxide gel type.

5. Method according to any one of claims 1 to 4; characterized in that the said volatile hydrolyzable or oxidizable compound is a halide.

6. Method according to claim 5, characterized in that the halide is selected from a group formed by the aluminium and zirconium chlorides.

7. Methode according to claims 1 to 4, characterized in that the said volatile hydrolyzable or oxidizable compound is an organo-metallic compound.

8. Method according to claim 1, characterized in that the reactant gas mixture is specifically constituted by at least one of the aluminium or zirconium chloride, carbon dioxide and hydrogen, the overall pressure inside the infiltration chamber being set to a value situated between $66 \cdot 10^{-4}$ and 0.4 atm, ($65 \cdot 10^{-4}$ to 0.39 bar) and preferably between 0.013 and 0.065 atm (0.013 and 0.064 bar) and the temperature of the preform being set at a value situated between 800 and 1 200 °C, and preferably between 900 and 950 °C.

9. Method according to claim 8, characterized in that the reactant gas mixture contains aluminium chloride and zirconium chloride and the mixture $AlCl_3$-$ZrCl_4$ mixture contains between 5 and 20 % by mole of $AlCl_3$.

10. Method according to claim 1, to produce a matrix constituted for the most part of zirconia ($ZrO_2$) which has been partly or totally stabilized with an oxide of an element of the group constituted by magnesium, calcium and yttrium, characterized in that a sequence of impregnation with a gel type precursor of the stabilizing oxide followed by a firing of the precursor, resulting in a porous oxide alternates with a sequence of chemical vapor infiltration of zirconia, this depositing within the pores of the prefrom and of the stabilizing oxide in order to form a compact matrix of partly or totally stabilized zirconia.

11. Structure obtained according to the method of claim 1, characterized in that the matrix is constituted by at least one oxide, deposited by the chemical vapor deposition method of and element from the group consisting of aluminium, zirconium, chromium, titanium, hafnium, thorium and uranium.

12. Structure according to claim 11, characterized in that the fibrous texture is at least for the most part constituted by a compound from the group consisting of alumina, zirconia and silicium carbide.

13. Structure according to claim 11, characterized in that the fibrous texture is in pure alumina and the matrix is constituted by at least one oxide, deposited by the chemical vapor deposition method, from the group composed of pure alumina and pure zirconia.

14. Structure according to claim 13, characterized in that the pure alumina is of the corundum type.

15. Structure according to any one of claims 11 to 14, characterized in that the matrix is made of zirconia deposited by the chemical vapor deposition method, and a least partly stabilized by adding a small quantity of a stabilizing oxide from an element of the group consisting of the calcium, magnesium and yttrium oxides.

**Patentansprüche**

1. Verfahren zur Herstellung einer feuerfesten Verbundstruktur durch Verdichten einer feuerfesten faserigen Vorform aus Keramikmaterial mit einem zumindest teilweise ein Oxid mit einem Schmelzpunkt

über 1 750 °C enthaltenden material, gekennzeichnet durch Erhitzen der faserigen Vorform in einer Infiltrationskammer in einem reaktiven Gasgemisch, das in die Kammer eingeführt wird und mindestens ein gasförmiges Hydrolyse- oder Oxydationsmittel und eine flüchtige oxydierbare oder hydrolysierbare Verbindung des oder jedes Elements des Oxids enthält, aus dem die Matrix des herzustellenden Struktur aufgebaut ist, um durch chemische Reaktion einen haftenden Niederschlag des oder der die Matrix aufbauenden Oxids (Oxide) herzustellen, wobei die Werte des Gesamtdrucks, der Temperatur und des Gasdurchsatzes in der Infiltrationskammer so gewählt werden, daß sie etwas über der Minimalwerten liegen, die notwendig sind, um die chemische Reaktion so durchzuführen, daß die Bestandteile des reaktiven Gasgemisches bis ins Innere der Poren diffundieren können, bevor sie zum haftenden Niederschlag reagieren.

2. Verfahren nach Anspruch 1, dadurch gekennzeichnet, daß die faserige Vorform vor der Gasinfiltration verfestigt wird, um die Fasern untereinander zu verbinden, wobei die Verfestigung durch mindestens einen Cyclus durchgeführt wird, der die Flüssigimprägnierung einer Vorstufe eines feuerfesten Materials mit guter Oxydationsbeständigkeit und einem Schmelzpunkt über 1 750 °C und das Brennen der Vorstufe zu einer offenen Restporosität von 20 bis 50 % umfasst.

3. Verfahren nach Anspruch 2, dadurch gekennzeichnet, daß das nach dem Brennen erhaltene Verfestigungsmaterial zu mindestens einem Oxid der folgenden Elemente gehört : Magnesium, Calcium, Aluminium, Yttrium, Zirkonium, Hafnium, Thorium, Chrom, Titan und Uran.

4. Verfahren nach Anspruch 2 oder 3, dadurch gekennzeichnet, daß die Vorstufe des Verfestigungsmaterials eine Vorstufe des Hydroxid- oder Alkoxidgel-Typs ist.

5. Verfahren nach einem der Ansprüche 1 bis 4, dadurch gekennzeichnet, daß die flüchtige hydrolysierbare oder oxydierbare Verbindung ein Halogenid ist.

6. Verfahren nach Anspruch 5, dadurch gekennzeichnet, daß das Halogenid aus Aluminium- und Zirkoniumchloriden ausgewählt wird.

7. Verfahren nach einem der Ansprüche 1 bis 4, dadurch gekennzeichnet, daß die flüchtige hydrolysierbare oder oxydierbare Verbindung eine metallorganische Verbindung ist.

8. Verfahren nach Anspruch 1, dadurch gekennzeichnet, daß das reaktive Gasgemisch insbesondere mindestens ein Aluminium- oder Zirkoniumchlorid, Kohlendioxid und Wasserstoff enthält, der Gesamtdruck in der Infiltrationskammer von $66 \cdot 10^{-4}$ bis 0,4 atm ($65 \cdot 10^{-4}$ bis 0,39 bar) und vorzugsweise von 0,013 bis 0,065 atm (0,013 bis 0,064 bar) und die Temperatur der Vorform von 800 bis 1 200 °C und vorzugsweise von 900 bis 950 °C beträgt.

9. Verfahren nach Anspruch 8, dadurch gekennzeichnet, daß das reaktive Gasgemisch Aluminiumchlorid und Zirkoniumchlorid und das Gemisch $AlCl_3$-$ZrCl_4$ 5 bis 20 Mol-% $AlCl_3$ enthält.

10. Verfahren nach Anspruch 1 zur Herstellung einer Matrix aus im wesentlichen Zirkoniumdioxid ($ZrO_2$), das teilweise oder vollständig mit einem Magnesium-, Calcium- und/oder Yttriumoxid stabilisiert ist, gekennzeichnet durch die abwechselnde Durchführung einer Imprägnierung mit einer Gelvorstufe des stabilisierenden Oxids und anschließendem Brennen zu einem porösen Oxid und einer chemischen Infiltration mit gasförmigen Zirkoniumdioxid, das sich im Inneren der Poren der Vorstufe und des stabilisierenden Oxids niederschlägt und eine kompakte, teilweise oder vollständig stabilisierte Zirkoniumdioxid-Matrix bildet.

11. Verbundstruktur, erhältlich nach Anspruch 1, dadurch gekennzeichnet, daß die Matrix mindestens ein aus der Gasphase niedergeschlagenes Oxid der folgenden Elemente enthält : Aluminium, Zirkonium, Chrom, Titan, Hafnium, Thorium und Uran.

12. Verbundstruktur nach Anspruch 11, dadurch gekennzeichnet, daß das faserige Gerüst zumindest teilweise ein Aluminiumoxid, Zirkoniumdioxid und/oder Siliciumcarbid enthält.

13. Verbundstruktur nach Anspruch 11, dadurch gekennzeichnet, daß das faserige Gerüst aus reinem Aluminium ist und die Matrix zumindest ein aus der Gasphase niedergeschlagenes reines Aluminium- und/oder Zirkoniumoxid enthält.

14. Verbundstruktur nach Anspruch 13, dadurch gekennzeichnet, daß das reine Aluminiumoxid Korund ist.

15. Verbundstruktur nach einem der Ansprüche 11 bis 14, dadurch gekennzeichnet, daß die Matrix aus aus der Gasphase niedergeschlagenem Zirkoniumdioxid ist und durch Zugabe einer geringen Menge eines stabilisierenden Calcium-, Magnesium und/oder Yttriumoxid stabilisiert ist.

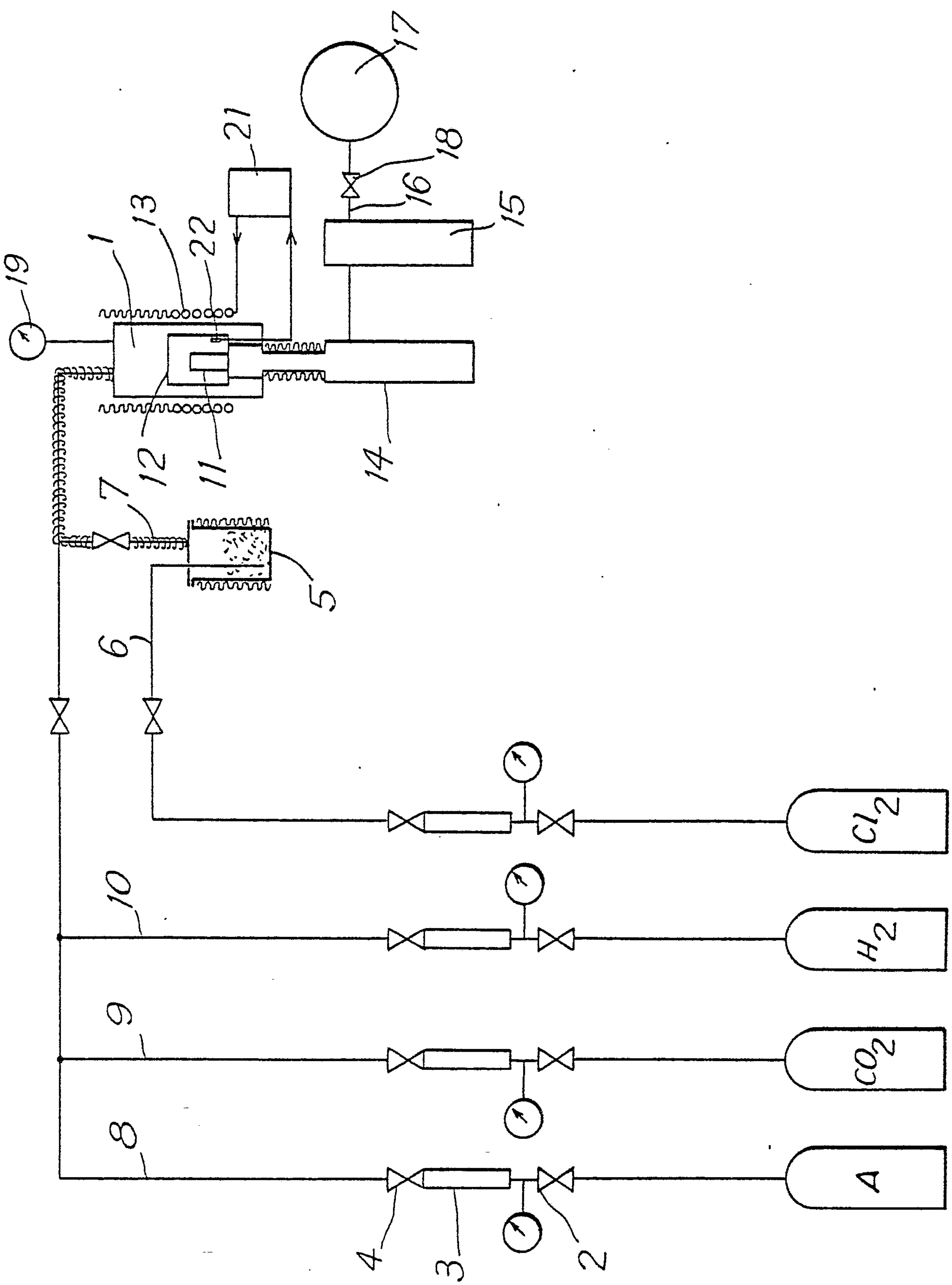

17
21
18
16
15
13
22
1
19
12
11
14
7
5
6
10
9
8
4
3
2
$Cl_2$
$H_2$
$CO_2$
A